**Europäisches Patentamt**

**European Patent Office**

**Office européen des brevets**

(19)

(11) Veröffentlichungsnummer: **0 247 598**
**B1**

(12) **EUROPÄISCHE PATENTSCHRIFT**

(45) Veröffentlichungstag der Patentschrift:
03.01.90

(51) Int. Cl.⁴: **B65G 25/08**, B23K 11/08

(21) Anmeldenummer: **87107737.6**

(22) Anmeldetag: **27.05.87**

(54) **Fördervorrichtung für Werkstücke.**

(30) Priorität: **28.05.86 CH 2159/86**

(43) Veröffentlichungstag der Anmeldung:
**02.12.87 Patentblatt 87/49**

(45) Bekanntmachung des Hinweises auf die Patenterteilung:
**03.01.90 Patentblatt 90/1**

(84) Benannte Vertragsstaaten:
**CH DE ES FR GB GR IT LI NL**

(56) Entgegenhaltungen:
**AT-B- 367 670**
**DE-A- 3 118 133**
**GB-A- 1 566 139**

**ARTOBOLEVSKI, Les mécanismes dans la technique
moderne, Tome 4, Moscou 1977, Seite 548**

(73) Patentinhaber: **ELPATRONIC AG, Baarerstrasse 117,
CH-6300 Zug(CH)**

(72) Erfinder: **Gysi, Peter, Rotenstein 3,
CH-5454 Bellikon(CH)**

(74) Vertreter: **Hotz, Klaus, Dipl.-El.-Ing. / ETH, c/o
SOUDRONIC AG Industriestrasse 35 Postfach 11,
CH-8962 Bergdietikon(CH)**

## Beschreibung

Die Erfindung betrifft eine Fördervorrichtung für Werkstücke mit einem Klinkenträger, der längs einer Führung hin- und herbewegbar ist, mindestens einer Förderklinke, die am Klinkenträger schwenkbar angeordnet ist, und einem Getriebe, das den Klinkenträger mit einem Drehantrieb verbindet.

Bei einer bekannten Fördervorrichtung dieser Gattung (DE-A 3 118 133) ist die Förderklinke an einem Gleitschlitten schwenkbar gelagert, der mittels einer Schubstange längs einer Gleitschiene hin- und herbewegbar ist. Die Schubstange ist über einen Kurbelbetrieb mit einem Drehantrieb verbunden. Diese Einrichtung muss bei unterschiedlichen Werkstücklängen entsprechend verschoben werden.

Solche bekannten Fördervorrichtungen bewähren sich z.B. bei Maschinen zum Verschweissen der Längsränder gerundeter Zargen von Blechdosen, solange die Anzahl der je Zeiteinheit zu verschweissenden Zargen einen bestimmten Betrag von beispielsweise 300 Stück je Minute nicht überschreitet. Bei höheren Förderfrequenzen ist die bekannte Fördervorrichtung jedoch störanfällig.

Aus dem Dokument "I. ARTOBOLEVSKI, 'Les mécanismes dans la technique moderne', Tome 4, Moscou 1977", Seite 548, ist ein Getriebe an sich bekannt, welches eine hin- und herdrehende Scheibe und ein biegeelastisches Band aufweist. Das Band ist mit einem seiner Enden an der Scheibe befestigt und umschlingt diese teilweise; das andere Ende des Bandes ist mit einem anzutreibenden Gleitschlitten verbunden. Bei diesem Getriebe besteht die Schwierigkeit, dass während des Vorwärtshubes, insbesondere wenn am Schlitten grössere Beschleunigungskräfte wirken, das Band dazu neigt, sich vom Umfang der Scheibe abzuheben; es wird dann die genaue, der Scheibendrehung entsprechende Hublänge nicht eingehalten, bzw. die Anwendung des Getriebes ist auf relativ niedrige Taktfrequenzen beschränkt.

Der Erfindung liegt deshalb die Aufgabe zugrunde, unter Verwendung eines Getriebes der vorgenannten Art die gattungsgemässe Fördervorrichtung für Werkstücke derart weiterzubilden, dass sie auch bei hohen Förderfrequenzen betriebssicher und leicht auf unterschiedliche Förderhübe einstellbar ist. Die Aufgabe ist erfindungsgemäss dadurch gelöst, dass das Getriebe mindestens eine erste hin- und herdrehbare Scheibe und mindestens ein erstes biegeelastisches Band aufweist, welches mit einem seiner Enden an der Scheibe befestigt ist, diese teilweise umschlingt und mit seinem anderen Ende am Klinkenträger oder an der Förderklinke befestigt ist, und dass mindestens ein Teil des Umfangs der Scheibe von Leitkörpern umgeben ist, die das zugehörige Band um die betreffende Scheibe herum führen.

Die erfindungsgemässe Fördervorrichtung hat vor allem den Vorteil, dass, bei an sich geringen hin- und herbewegten trägen Massen von Klinkenträger, Förderklinke und Band, der lineare Hubweg auch bei hohen Förderfrequenzen exakt entsprechend der Scheibendrehung ausgeführt wird. Dennoch schützt das bzw. jedes biegeelastische Band die Vorrichtung und die Werkstücke vor Beschädigungen, da es elastisch ausweichen kann, wenn es durch zu grosse Schubkräfte überlastet wird.

Hinsichtlich Betriebssicherheit ist es zweckmässig, wenn mindestens einer der Leitkörper bei Ueberlast selbsttätig von der zugehörigen Scheibe wegbewegbar ist. Es ist dadurch möglich, einerseits über die biegeelastischen Bänder erhebliche Schubkräfte zu übertragen, andererseits aber den Vorteil der Bänder beizubehalten, wonach sie bei Ueberlast eine sich von der Scheibe wegbiegende Schleife bilden können, ohne dabei beschädigt zu werden.

Die vorstehend beschriebene Ausführungsform der Erfindung kann derart ausgestaltet sein, dass zwei Leitkörper an je einem Backen angeordnet sind und diese Backen bei Ueberlast voneinander und von der zugehörigen Scheibe wegschwenkbar sind. Dabei sind die beiden Backen zweckmässigerweise durch eine gemeinsame, bistabile Federanordnung abgestützt. Ferner ist es zweckmässig, wenn mindestens einem bei Ueberlast wegbewegbaren Leitkörper ein Sensor zugeordnet ist, der den Drehantrieb bei Ueberlast abschaltet.

Bei einfachen Ausführungsformen der erfindungsgemässen Fördervorrichtung braucht nur eine einzige hin- und herbewegbare Scheibe samt zugehörigem biegeelastischem Band vorgesehen zu sein.

Wenn dieses einzige Band am Klinkenträger befestigt ist, kann die Klinke derart gestaltet sein, dass sie vor Beginn jedes Arbeitshubes des Klinkenträgers durch ihre eigene Schwerkraft in eine Arbeitsstellung schwenkt und am Anfang des anschliessenden Rückhubes des Klinkenträgers von einem nachfolgenden Werkstück in eine unwirksame Stellung geschwenkt wird. Andererseits ist es bei Verwendung einer hin- und herdrehbaren Scheibe auch möglich, dass das zugehörige biegeelastische Band an der Förderklinke befestigt ist und über diese dem Klinkenträger seine hin- und hergehenden Bewegungen erteilt; in diesem Fall können die erforderlichen Schwenkungen der Förderklinke in bezug zum Klinkenträger jeweils durch dessen Massenträgheit und/oder Reibung an der zugehörigen Führung bewirkt werden.

Besonders vorteilhaft ist jedoch eine Weiterbildung der Erfindung, bei der an einer ersten hin- und herdrehbaren Scheibe ein Ende eines ersten biegeelastischen Bandes befestigt ist, dessen anderes Ende am Klinkenträger befestigt ist, an einer zweiten hin- und herdrehbaren Scheibe ein Ende eines zweiten biegeelastischen Bandes ist, dessen anderes Ende an der Förderklinke befestigt ist, wobei die beiden Scheiben gegeneinander phasenverschoben antreibbar sind.

Einfache Einstellmöglichkeiten für unterschiedliche Zargenlängen, d.h. für die Lage der Strecke, auf der sich der Klinkenträger hin- und herbewegt, und für die Lage des Schwenkbereichs der Förderklinke können sich erfindungsgemäss dadurch ergeben, dass jede der Scheiben mit einer sie antreibenden Welle durch eine Kupplung verbunden ist, die eine stufenlose Dreheinstellung der Scheibe in bezug auf die Welle ermöglicht.

Eine raumsparende Anordnung der Scheiben wird dadurch ermöglicht, dass eine der beiden Scheiben auf einem Teil ihres Umfangs von beiden Bändern umschlungen wird. Dabei ist es besonders vorteilhaft, wenn eines der Bänder beide Scheiben gegensinnig umschlingt.

Die erfindungsgemässe Fördervorrichtung eignet sich besonders für eine Maschine zum Verschweissen der Längsränder gerundeter Zargen, welche Maschine eine Gleitschiene aufweist, an der die Längsränder geführt sind. Für diesen Anwendungsfall lässt sich die Erfindung dadurch weiter ausgestalten, dass längs mindestens eines Teils der Gleitschiene eine Bandführung angeordnet ist, und dass der Klinkenträger rittlings auf der Bandführung sitzt und beiderseits von ihr je eine Förderklinke trägt.

Ein Ausführungsbeispiel der Erfindung wird im folgenden anhand schematischer Zeichnungen mit weiteren Einzelheiten erläutert.

Es zeigt:

Fig. 1 eine Seitenansicht der erfindungsgemässen Vorrichtung,
Fig. 2 eine Vergrösserung der linken Hälfte der Fig. 1,
Fig. 3 eine Vergrösserung der rechten Hälfte der Fig. 1,

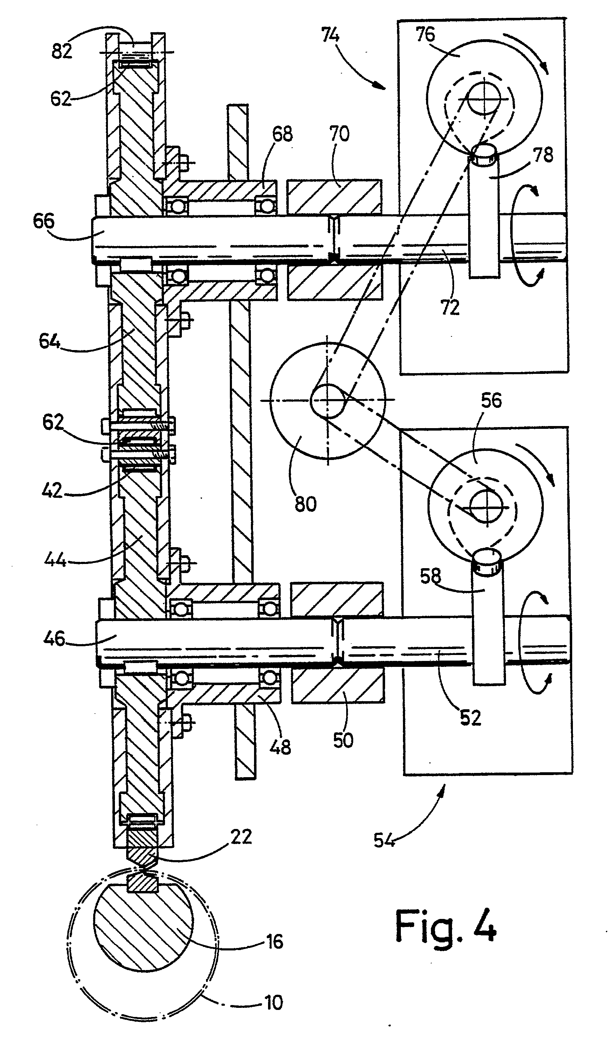

Fig. 4 den senkrechten Schnitt IV–IV in Fig. 2,
Fig. 5 den Teilschnitt V–V in Fig. 2,
Fig. 6 den Teilschnitt VI–VI in Fig. 2,
Fig. 7 den Teilschnitt VII-VII in Fig. 3,
Fig. 8 eine der Fig. 2 entsprechende Ansicht einer abgewandelten Ausführungsform.

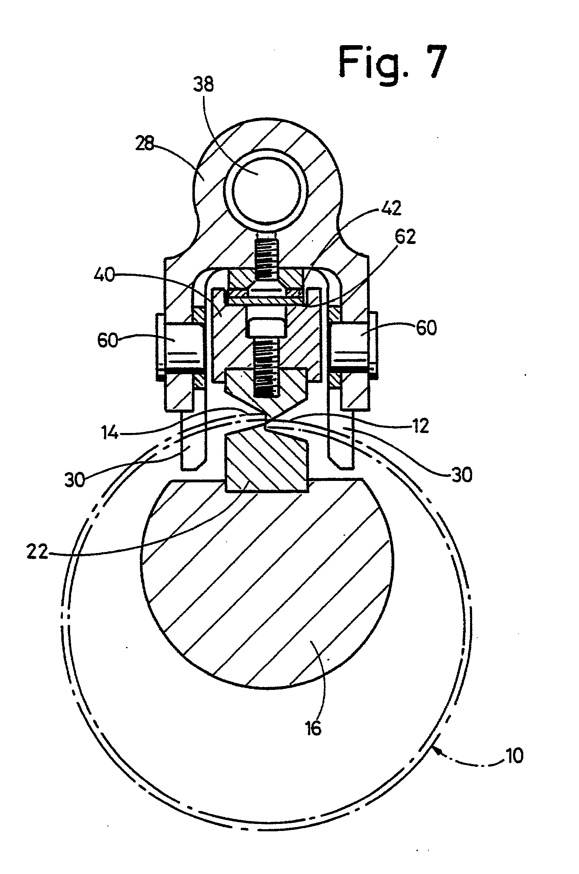

Die erfindungsgemässe Fördervorrichtung ist in eine nur teilweise dargestellte Maschine eingebaut, mit der Dosenzargen 10 aus Blech an ihren Längsrändern 12 und 14 (Fig. 7) verschweisst werden. Die Maschine hat einen ortsfesten waagerechten Arm 16, um den herum die Dosenzargen 10 von einer nicht dargestellten Vorrichtung in bekannter Weise gerundet werden, um anschliessend längs des Arms 16 von Mitnehmern 18 einer Förderkette 20 in eine Gleitschiene 22 eingeführt zu werden. Die Gleitschiene 22 ist auf dem Arm 16 befestigt, erstreckt sich in dessen Längsrichtung und hat ein Z-förmiges Profil, in dem die beiden Längsränder 12 und 14 jeder Dosenzarge 10 derart geführt werden, dass sie schliesslich einander überlappend zwischen zwei Elektrodenrollen 24 und 26 hindurchbewegt werden.

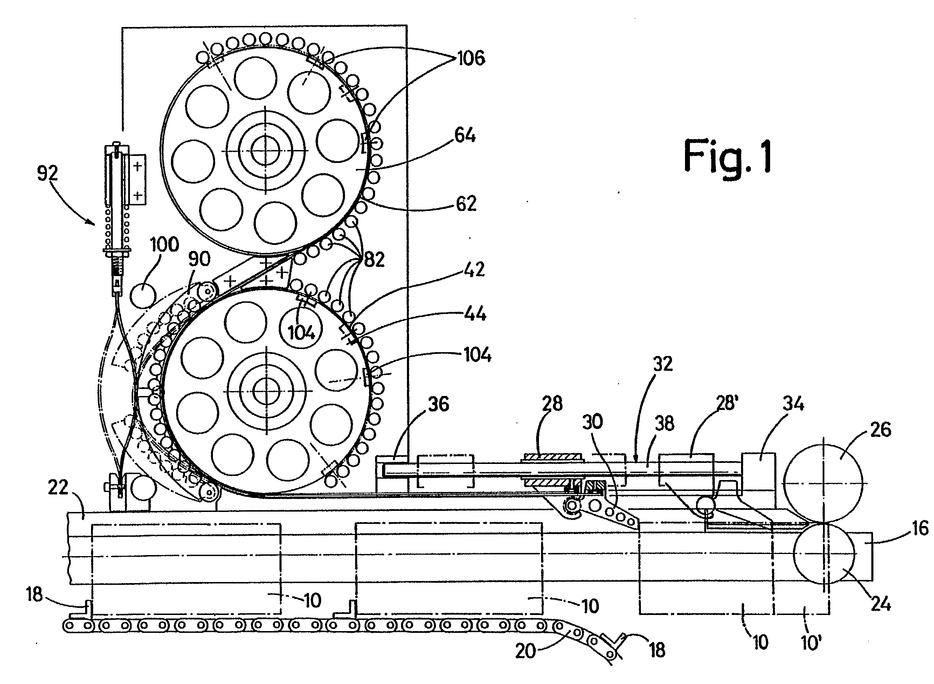

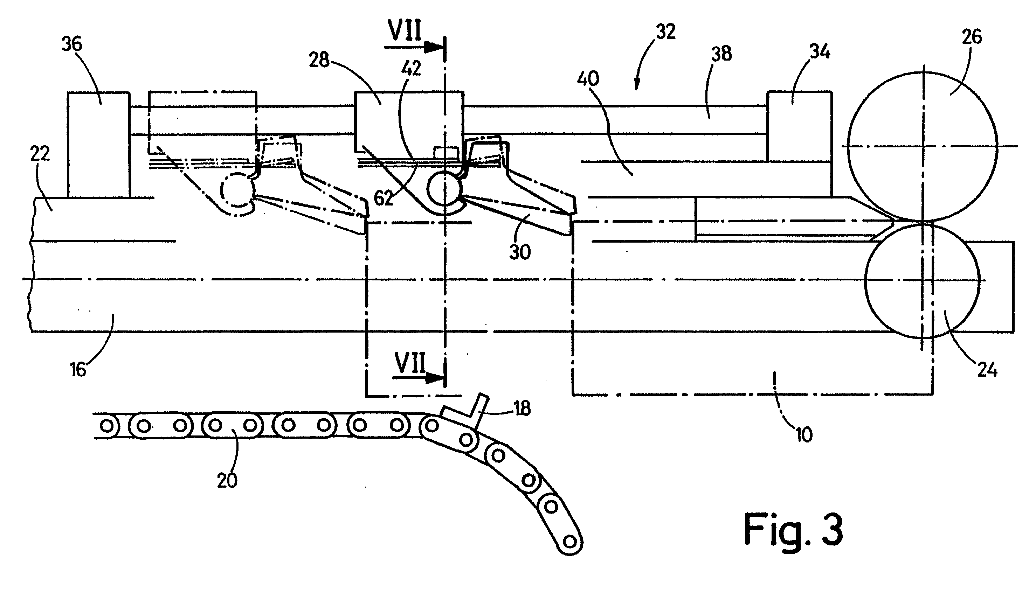

Die erfindunggemässe Vorrichtung hat die Aufgabe, die von der Förderkette 20 in Abständen voneinander herangeführten und freigegebenen Dosenzargen 10 zu übernehmen und längs des vorderen, in Fig. 1 und 3 rechten Abschnitts der Gleitschiene 22 soweit vorzuschieben, dass die Längsränder 12 und 14 von den Elektrodenrollen 24 und 26 erfasst und in einer Ueberlappt-Quetschnaht miteinander verschweisst werden.

Zu diesem Zweck ist an einem Klinkenträger 28 ein Paar Förderklinken 30, die an jeweils einer Dosenzarge 10 nahe deren Längsrändern 12 und 14 angreifen, auf- und abschwenkbar gelagert. Der Klinkenträger 28 ist längs einer Führung 32 hin- und herbewegbar, die auf dem vorderen Abschnitt der Gleitschiene 22 befestigt ist und zwei Böcke 34 und 36 aufweist, zwischen denen sich eine zylindrische Stande 38 parallel zum Arm 16 erstreckt. Der Klinkenträger 28 ist auf der Stange 38 geführt und sitzt rittlings auf einem unteren Teil der Führung 32, der eine Bandführung 40 bildet.

Zum Hin- und Herbewegen des Klinkenträgers 28 ist ein erstes biegeelastisches Band 42 aus Federstahl (oder faserverstärktem Kunststoff, Glasfaser, Kohlefaser, Keflar) vorgesehen, das mit je einem Ende am Klinkenträger und am Umfang einer ersten kreisförmigen Scheibe 44 befestigt ist. Die Scheibe 44 ist an einer Welle 46 befestigt, die in einem ortsfesten Lagergehäuse 48 gelagert und über eine Klemmkupplung 50 mit der Antriebswelle 52 eines Pendelgetriebes 54 dreheinstellbar verbunden ist. Das Pendelgetriebe 54 ist von bekannter Bauart und hat eine mit gleichmässiger Winkelgeschwindigkeit antreibbare Kurvenscheibe 56 von kreisförmigem Umriss, die bei ihrer Drehung einem an der Abtriebswelle 52 befestigten Pendel 58 hin- und hergehende Drehbewegungen erteilt.

Für die schwenkbare Lagerung der Förderklinken 30 am Klinkenträger 28 ist an diesem ein Paar miteinander fluchtender Zapfen 60 angeordnet, deren gemeinsame geometrische Achse sich quer zur Längsrichtung des Arms 16 und der Führung 32 erstreckt. Zum Schwenken der Förderklinken 30 zwischen einer unteren Arbeitsstellung und einer oberen Rückzugsstellung sind die Förderklinken durch ein zweites biegeelastisches Band 62 aus Federstahl (oder faserverstärktem Kunststoff, Glasfaser, Kohlefaser, Keflar) mit einer zweiten Scheibe 64 von kreisförmigem Umriss verbunden.

Das zweite Band 62 liegt unmittelbar auf der Bandführung 40 und umschlingt gemeinsam mit dem ersten Band 42 einen Umfangsabschnitt der ersten Scheibe 44, ehe es die zweite Scheibe 64 erreicht. Diese wird von dem Band 62 in einer Richtung umschlungen, die der Umschlingungsrichtung der Scheibe 44 entgegensetzt ist. Auf diese Weise gelingt es, den Zwischenraum zwischen den beiden Scheiben 44 und 64 besonders klein zu halten und die beiden Scheiben raumsparend senkrecht übereinander anzuordnen.

Die zweite Scheibe 64 ist auf einer Welle 66 befestigt, die in einem ortsfesten Lagergehäuse 68 gelagert und über eine Klemmkupplung 70 mit der Abtriebswelle 72 eines zweiten Pendelgetriebes 74 dreheinstellbar verbunden ist. Auch dieses zweite Pendelgetriebe 74 hat eine mit gleichmässiger Winkelgeschwindigkeit drehbare Kurvenscheibe 76 und ein von dieser hin- und herbewegbares Pendel 78, das an der Antriebswelle 72 befestigt ist.

Den beiden Kurvenscheiben 76 ist ein gemeinsamer Drehantrieb 80 zugeordnet; infolgedessen sind die von den Pendelgetrieben 54 und 74 hervorgerufenen hin- und hergehenden Drehbewegungen der beiden Scheiben 44 und 64 aufeinander abgestimmt. Die Kurvenscheiben 56 und 76 sind jedoch so gestaltet und angeordnet, dass die Drehbewegung der beiden Scheiben 44 und 64 gegeneinander phasenverschoben sind.

Die Phasenverschiebung ist derart, dass bei jedem Arbeitshub des Klinkenträgers 28 - Bewegung von links nach rechts in Fig. 1 und 3 - die Förderklinken 30 ihre untere Stellung, die Arbeitsstellung, einnehmen und dabei eine Dosenzarge 10 vor sich herschieben. Am Ende jedes Arbeitshubes schwenken die Förderklinken 30 nach oben, sodass sie sich beim Rückhub des Klinkenträgers 28 oberhalb der zuletzt vorgeschobenen Dosenzarge 10, ohne diese zu berühren, zurückbewegen. Schliesslich werden die Förderklinken 30 am Ende des Rückhubes wieder nach unten in ihre Arbeitsstellung geschwenkt.

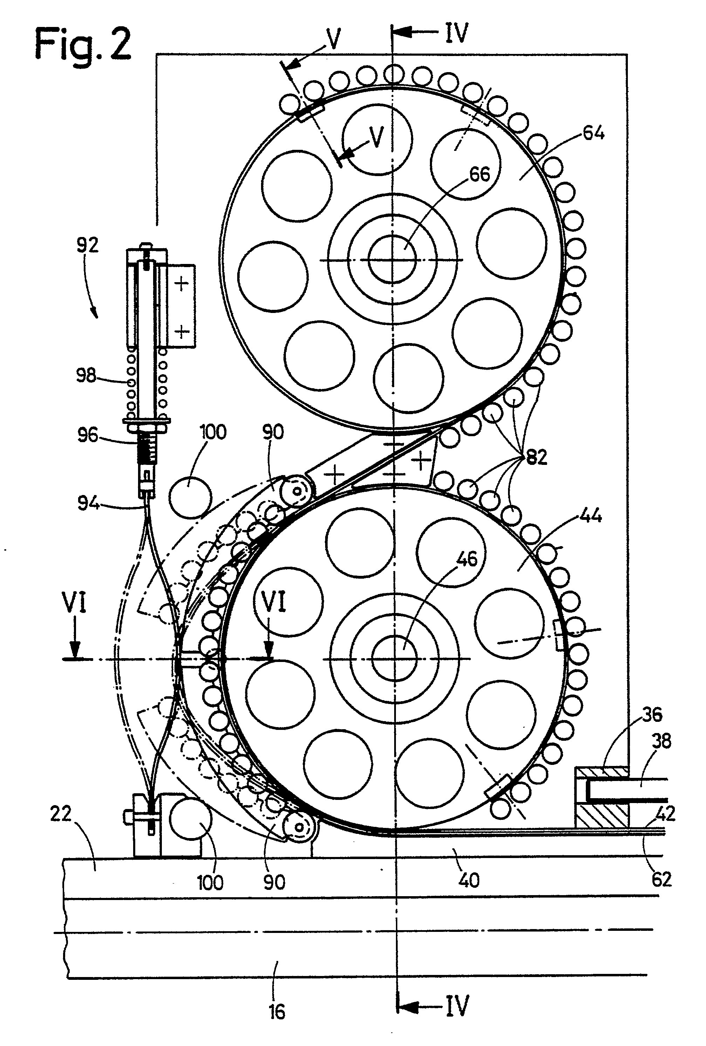

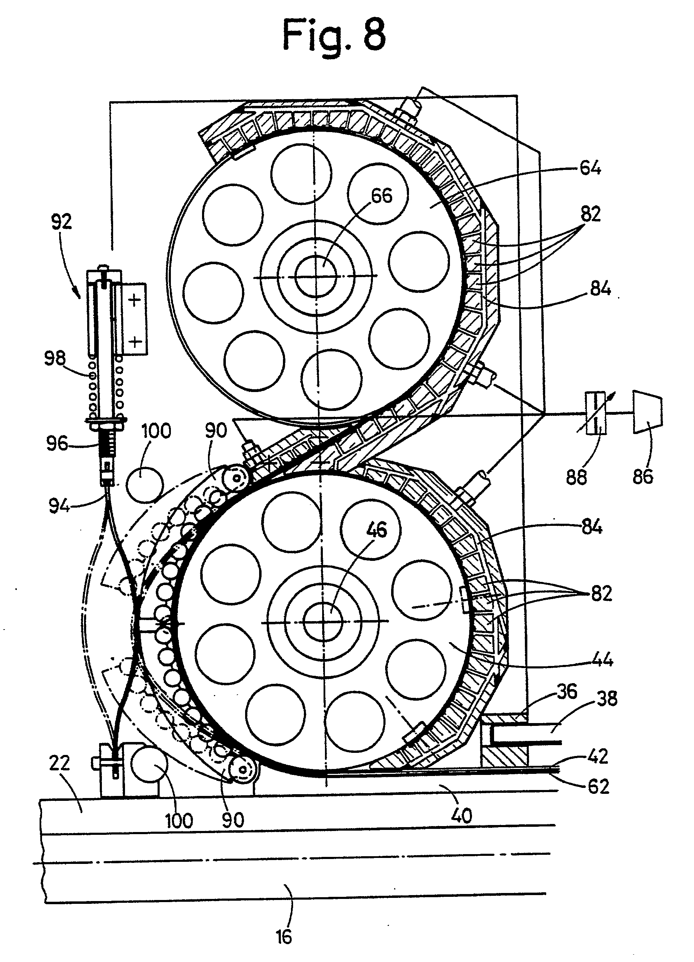

Die Scheiben 44 und 64 sind so angeordnet, dass die Bänder 42 und 62 den Klinkenträger 28 bzw. die Förderklinken 30 bei jedem Arbeitshub schieben und beim Rückhub ziehen. Die Bänder 42 und 62 sind also jeweils beim Arbeitshub auf Druck belastet. Damit die Bänder 42 und 62 bei Belastungen, die als zulässig angesehen werden, nicht ausweichen können, sind rings um Randbereiche der beiden Scheiben 44 und 64, die von dem einen oder anderen Band oder von beiden Bändern 42 und 62 umschlungen werden, Leitkörper 82 angeordnet. Die Leitkörper 82 können gemäss Fig. 1 und 2 von einzelnen, achsparallel zu den Scheiben 44 und 64 gelagerten Rollen und/oder gemäss Fig. 8 von nicht drehbaren Blöcken gebildet sein, zwischen denen durch Kanäle 84 zur möglichst reibungsfreien Abstützung der Bänder 42 und 62 Druckluft austritt, die von einem Verdichter 86 über einen Druckregler 88 geliefert wird.

Die erste Scheibe 44 wird in einem Bereich ihres Umfangs von beiden Bändern 42 und 62 umschlungen. Die in diesem Bereich angeordneten Leitkörper 82 sind in zwei Gruppen unterteilt, die an je einem Backen 90 angeordnet sind. Die beiden Backen 90 sind derart gelagert, dass sie voneinander und von der Scheibe 42 wegschwenkbar sind. In Fig. 1, 2 und 8 sind die beiden Backen 90 mit vollen Linien in ihrer normalen Betriebsstellung dargestellt und mit strichpunktierten Linien in einer weggeschwenkten Stellung angedeutet, die sie einnehmen, wenn mindestens eines der beiden Bänder 42 oder 62 bei einem Arbeitshub überlastet wird, beispielsweise dadurch, dass sich eine Dosenzarge 10 verklemmt hat oder ein Stau von mehreren Dosenzargen entstanden ist.

Die Betriebsstellung der beiden Backen 90 wird normalerweise durch eine bistabile Federanordnung 92 aufrechterhalten. Diese besteht im wesentlichen aus einer Blattfeder 94, die an einem ihrer Enden fest eingespannt und mit ihrem anderen Ende an einem Stift 96 befestigt ist, der durch eine Druckfeder 98 in Richtung zur Blattfeder 94 belastet ist. In ihrer Normalstellung, die in Fig. 1, 2 und 8 mit vollen Linien gezeichnet ist, hat die Blattfeder 94 eine Wölbung, mit der sie in bezug auf die Scheibe 44 radiale Kräfte auf die beiden Backen 90 ausübt. Bei Ueberlast schnappt die Blattfeder 94 um, wobei sie sich von der Scheibe 44 wegwölbt und die beiden Backen 90 freigibt. Der Schwenkbereich der beiden Backen 90 von der Scheibe 44 weg ist durch Anschläge 100 begrenzt.

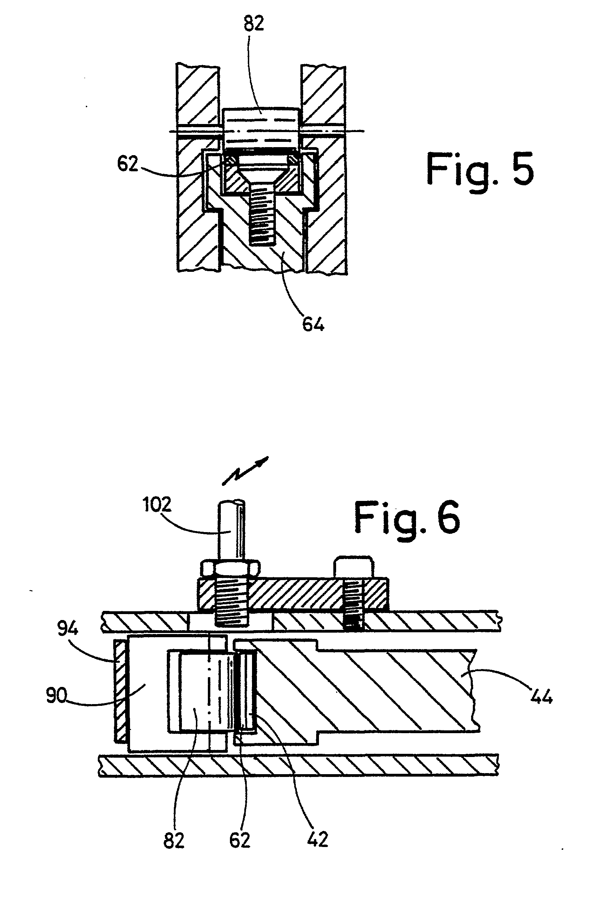

Die Stellung der Backen 90 wird von einem Sensor 102 (Fig. 6) überwacht. Wenn die Backen 90 von der Scheibe 44 wegschwenken, gibt der Sensor 102 ein Signal ab, das von einer Ueberwachungsschaltung bekannter Art ausgewertet wird und dazu führt, dass der Drehantrieb 80 sofort abgeschaltet wird.

Anstelle der in Fig. 1 angedeuteten, verhältnismässig langen Dosenzargen 10 kann die beschriebene Vorrichtung kürzere Dosenzargen in den Einwirkungsbereich der Elektrodenrollen 24 und 26 fördern. Beim Fördern einer solchen sehr viel kürzeren Dosenzarge 10', die in Fig. 1 ebenfalls angedeutet ist, gelangt der Klinkenträger in die mit 28' bezeichnete Endstellung. In Fig. 1 ist schliesslich angedeutet, dass jedes der Bänder 42 und 62 an der zugehörigen Scheibe 44 bzw. 64 mittels eines Klemmkörpers 104 bzw. 106 befestigt ist. Diese Klemmkörper 104 und 106 nehmen bei den hin- und hergehenden Drehungen der zugehörigen Scheibe 44 bzw. 64 unterschiedliche Endstellungen ein, je nach dem für welche Dosenlänge diese Drehungen eingestellt sind.

## Patentansprüche

1. Fördervorrichtung für Werkstücke, mit einem Klinkenträger (28, 28'), der längs einer Führung (32) hin- und herbewegbar ist, mindestens einer Förderklinke (30), die am Klinkenträger (28, 28') schwenkbar angeordnet ist, und einem Getriebe, das den Klinkenträger (28, 28') mit einem Drehantrieb verbindet, dadurch gekennzeichnet, dass das Getriebe mindestens eine erste hin- und herdrehbare Scheibe (44, 64) und mindestens ein erstes, biegeelastisches Band (42, 62) aufweist, welches mit einem seiner Enden an der Scheibe (44, 64) befestigt ist, diese teilweise umschlingt und mit seinem anderen Ende am Klinkenträger (28, 28') oder an den Förderklinken (30) befestigt ist, und dass mindestens ein Teil des Umfangs der Scheibe (44, 64) von Leitkörpern (82) umgeben ist, die das zugehörige Band (42, 62) um die betreffende Scheibe (44, 64) herum führen.

2. Fördervorrichtung nach Anspruch 1, dadurch gekennzeichnet, dass mindestens ein Teil der Leitkörper (82) bei Ueberlast selbsttätig von der zugehörigen Scheibe (44) wegbewegbar ist.

3. Fördervorrichtung nach Anspruch 2, dadurch gekennzeichnet, dass zwei Leitkörper oder Gruppen von Leitkörpern (82) an je einem Backen (90) angeordnet sind, und diese Backen (90) bei Ueberlast voneinander und von der zugehörigen Scheibe (44) wegschwenkbar sind.

4. Fördervorrichtung nach Anspruch 3, dadurch gekennzeichnet, dass die beiden Backen (90) durch eine gemeinsame, bistabile Federanordnung (92) abgestützt sind.

5. Fördervorrichtung nach einem der Ansprüche 2 bis 4, dadurch gekennzeichnet, dass mindestens einem bei Ueberlast wegbewegbaren Leitkörper (82) ein Sensor (102) zugeordnet ist, der den Drehantrieb (80) bei Ueberlast abschaltet.

6. Fördervorrichtung nach einem der Ansprüche 1 bis 5, dadurch gekennzeichnet, dass an einer zweiten hin- und herdrehbaren Scheibe (64) ein Ende eines zweiten biegeelastischen Bandes (62) befestigt ist, dessen anderes Ende an der Förderklinke (30) befestigt ist, und dass die erste und zweite Scheibe (44, 64) gegeneinander phasenverschoben antreibbar sind.

7. Fördervorrichtung nach Anspruch 6, dadurch gekennzeichnet, dass jede der Scheiben (44, 64) mit einer sie antreibenden Welle (52, 72) durch eine Kupplung (50, 70) verbunden ist, die eine stufenlose Dreheinstellung der Scheibe in bezug auf die Welle ermöglicht.

8. Fördervorrichtung nach Anspruch 6 oder 7, dadurch gekennzeichnet, dass eine der beiden Scheiben (44) auf einem Teil ihres Umfangs von beiden Bändern (42, 62) umschlungen wird.

9. Fördervorrichtung nach Anspruch 8, dadurch gekennzeichnet, dass eines der Bänder (62) beide Scheiben (44, 64) gegensinnig umschlingt.

10. Fördervorrichtung nach einem der Ansprüche 1 bis 9 an einer Maschine zum Verschweissen der Längsränder (12, 14) gerundeter Zargen (10, 10'), welche Maschine eine Gleitschiene (22) aufweist, an der die Längsränder geführt sind, dadurch gekennzeichnet, dass längs mindestens eines Teils der Gleitschiene (22) eine Bandführung (40) angeordnet ist, und dass der Klinkenträger (28, 28') rittlings auf der Bandführung (40) sitzt und beiderseits von ihr je eine Förderklinke (30) trägt.

**Claims**

1. A conveyor device for workpieces, having a pawl carrier (28, 28') which can be reciprocated along a guide (32), at least one conveying pawl (30) which is pivotally mounted on the pawl carrier (28, 28'), and a transmission which connects the pawl carrier (28, 28') to a rotary drive, characterised in that the transmission comprises at least one first pulley (44, 64) which can be rotated backwards and forwards and at least one first flexibly resilient belt (42, 62) which is secured by one of its ends to the pulley (44, 64), wraps partially round this, and is secured by its other end to the pawl carrier (28, 28') or to the conveying pawls (30), and that at least a portion of the circumference of the pulley (44, 64) is surrounded by guide members (82) which guide the associated belt (42, 62) round the pulley (44, 64) in question.

2. A conveyor device according to Claim 1, characterised in that at least some of the guide members (82) can be moved automatically away from the associated pulley (44) in the event of overload.

3. A conveyor device according to Claim 2, characterised in that two guide members or groups of guide members (82) are each disposed on a jaw (90) and in the event of an overload, these jaws (90) can be swung away from one another and from the associated pulley (44).

4. A conveyor device according to Claim 3, characterised in that the two jaws (90) are supported by a common, bistable spring arrangement (92).

5. A conveyor device according to any one of Claims 2 to 4, characterised in that associated with at least one guide member (82) which can be swung away in the event of an overload is a sensor (102) which cuts off the rotary drive (80) in the event of an overload.

6. A conveyor device according to any one of Claims 1 to 5, characterised in that secured to a second pulley (64) which can be rotated backwards and forwards is one end of a second flexibly resilient belt (62), the other end of which is secured to the conveying pawl (30), and that the first and second pulleys (44, 64) can be driven phase-displaced in relation to one another.

7. A conveyor device according to Claim 6, characterised in that each of the pulleys (44, 64) is connected to a shaft (52, 72) driving it, through a coupling (50, 70) which renders possible an infinitely variable rotary adjustment of the pulley in relation to the shaft.

8. A conveyor device according to Claim 6 or 7, characterised in that one of the two pulleys (44) is wrapped round by both belts (42, 62) over a portion of its circumference.

9. A conveyor device according to Claim 8, characterised in that one of the belts (62) wraps round both pulleys (44, 64) in opposite directions.

10. A conveyor device according to any one of Claims 1 to 9 on a machine for welding together the longitudinal edges (12, 14) of rounded can bodies (10, 10'), which machine comprises a slide rail (22) on which the longitudinal edges are guided, characterised in that a belt guide (40) is disposed along at least a portion of the slide rail (32), and that the pawl carrier (28, 28') is seated astride on the belt guide (40) and carries a conveying pawl (30) at each side thereof.

**Revendications**

1. Dispositif de transport de pièces, comprenant un porte-taquet (28, 28') qui est déplaçable en va-et-vient le long d'un guide (32), au moins un taquet de transport (30), qui est monté basculant sur le porte-taquet (28, 28'), et une transmission qui relie le porte-taquet (28, 28') à un entraînement en rotation, caractérisé en ce que la transmission comprend au moins un premier disque mobile en rotation en va-et-vient (44, 64) et au moins une première bande élastique en flexion (42, 62) qui est fixée par l'une de ses extrémités sur le disque (44, 64), enveloppe celui-ci partiellement et est fixée par son autre extrémité sur le porte-taquet (28, 28') ou sur les taquets de transport (30), et en ce qu'au moins une partie de la périphérie du disque (44, 64) est entourée de corps de guidage (82) qui guident la bande associée (42, 62) autour du disque considéré (44, 64).

2. Dispositif de transport suivant la revendication 1, caractérisé en ce qu'au moins une partie des corps de guidage (82) est agencée de façon à pouvoir, en cas de surcharge, s'éloigner automatiquement du disque associé (44).

3. Dispositif de transport suivant la revendication 2, caractérisé en ce que deux corps de guidage ou groupes de corps de guidage (82) sont disposés chacun sur une mâchoire (90), et en ce que ces mâchoires (90) s'écartent, par basculement, l'une de l'autre et du disque associé (44) en cas de surcharge.

4. Dispositif de transport suivant la revendication 3, caractérisé en ce qu'un agencement élastique bistable (92) commun est en appui sur les deux mâchoires (90).

5. Dispositif de transport suivant l'une des revendications 2 à 4, caractérisé en ce qu'à au moins un corps de guidage (82) pouvant s'écarter en cas de surcharge est associé un détecteur (102) qui met à l'arrêt l'entraînement en rotation (80) en cas de surcharge.

6. Dispositif de transport suivant l'une des revendications 1 à 5, caractérise en ce qu'une extrémité d'une seconde bande élastique en flexion (62) est fixée sur un second disque (64) à mouvement de rotation en va-et-vient, l'autre extrémité de cette seconde bande étant fixée sur le taquet de transport (30), et en ce que le premier et le second disques (44, 64) peuvent être entraînés avec un décalage de phase l'un par rapport à l'autre.

7. Dispositif de transport suivant la revendication 6, caractérisé en ce que chacun des disques (44, 64) est relié à un arbre (52, 72), qui l'entraîne, par l'intermédiaire d'un accouplement (50, 70) qui permet un réglage continu de la position de ce disque en rotation par rapport à cet arbre.

8. Dispositif de transport suivant la revendication 6 ou 7, caractérisé en ce que l'un (44) des deux disques est enveloppé, sur une partie de sa périphérie, par les deux bandes (42, 62).

9. Dispositif de transport suivant la revendication 8, caractérisé en ce que l'une (62) des bandes s'enroule dans des sens opposés sur les deux disques (44, 64).

10. Dispositif de transport suivant l'une des revendications 1 à 9, monté sur une machine de soudage des bords longitudinaux (12, 14) de corps de boîte de conserve (10, 10') auxquels on a donné une forme cylindrique, cette machine comportant un rail de glissement (22) sur lequel les bords longitudinaux sont guidés, caractérisé en ce qu'un guide-bande (40) est disposé le long d'au moins une partie du rail de glissement (22), et en ce que le porte-taquet (28, 28') prend appui, en chevauchement, sur ce guide-bande (40) et porte, sur chacun des côtés de celui-ci, un taquet de transport (30).

Fig. 1

EP 0 247 598 B1

# Fig.2

Fig. 3

EP 0 247 598 B1

Fig. 4

Fig. 5

Fig. 6

# Fig. 7

# Fig. 8